# EUROPEAN PATENT SPECIFICATION

(11) **EP 4 401 188 B1**
(45) Date of publication and mention of the grant of the patent: **06.05.2026**
(21) Application number: 23848460.4
(22) Date of filing: 18.08.2023
(51) Int. Cl.: H01M 10/0587, H01M 50/489, H01M 50/449, H01M 10/052, H01M 50/107, H01M 10/04, H01M 50/451, H01M 50/46

(54) **JELLY ROLL-TYPE ELECTRODE ASSEMBLY AND SECONDARY BATTERY COMPRISING SAME**
JELLY-ROLL-ELEKTRODENANORDNUNG UND SEKUNDÄRBATTERIE DAMIT
ENSEMBLE ÉLECTRODE DE TYPE ROULEAU DE GELÉE ET BATTERIE SECONDAIRE LE COMPRENANT

(30) Priority: 01.12.2022 KR 20220165808; 11.08.2023 KR 20230105397
(43) Date of publication of application: 17.07.2024
(60) Divisional application: 26162145.2
(73) Proprietor: LG ENERGY SOLUTION, LTD., Seoul 07335 (KR)
(72) Inventor: KOO, Seongmo, Daejeon (KR); KIM, Young Soo, Daejeon (KR); PARK, Eun Ji, Daejeon (KR); LEE, Kwan Soo, Daejeon (KR); LEE, Byeongjoon, Daejeon (KR)
(74) Representative: Goddar, Heinz J.
(86) International application number: PCT/KR2023/012250
(87) International publication number: WO 2024/117460

(56) References cited:
- WO-A1-2022/122032
- WO-A1-2023/106733
- JP-A- 2001 202 985
- JP-A- 2003 303 624
- JP-B2- 4 628 981
- KR-A- 20040 058 921
- KR-A- 20150 015 253
- KR-A- 20150 071 250
- US-A1- 2004 180 259
- US-A1- 2009 325 058
- US-A1- 2022 352 601

## Description

### [Technical Field]

The present invention relates to a jelly-roll type electrode assembly and a secondary battery including the same, and more particularly, to a jelly-roll type electrode assembly including a separator overlapping portion and a cylindrical secondary battery including the same.

### [Background Art]

For a cylindrical battery, a jelly-roll type electrode assembly is manufactured by rolling a long electrode having a prescribed width into a roll form. In a cylindrical battery manufactured by inserting such a jelly-roll type electrode assembly into a battery case, contraction/expansion of the electrode repeatedly occurs during charging and discharging. In particular, when a degree of contraction/expansion of the electrode assembly increases due to a tab (in tab) located in a core of the jelly-roll type electrode assembly or a silicon-based active material added in a negative electrode, a pressure acting on a core part of the electrode assembly greatly increases.

As low-resistance/high-capacity designs increase recently, a jelly-roll type electrode assembly includes a plurality of tabs or a silicon-based active material is added, in many cases. Accordingly, the possibility of deformation of the electrode assembly located in the core part according to contraction/expansion of the electrode assembly increases. In particular, when a separator located between the negative electrode and the positive electrode is damaged, the negative electrode and the positive electrode come into direct contact with each other, causing heat generation and ignition due to an internal short.

In order to solve the problems of the separator damage and internal short caused by the deformation of the electrode assembly, it is necessary to develop a technology capable of protecting the negative electrode and separator in the corresponding region and suppressing the occurrence of the internal short.
WO 2023/106 733 A1 relates to a jelly-roll type electrode assembly including an overlapping portion of a separator and a cylindrical secondary battery including the same, and more specifically to a first separator. It also relates to a jelly-roll type electrode assembly including an adhesive and a second separator overlapping portion, and a cylindrical secondary battery including the same.
US 2022/352 601 A1 discloses a secondary battery including a battery device, a positive electrode terminal, a negative electrode terminal, and a porous member. The battery device includes a positive electrode and a negative electrode that are opposed to each other with a separator interposed therebetween. The positive electrode terminal is coupled to the positive electrode on a side of the positive electrode opposed to the negative electrode. The negative electrode terminal is coupled to the negative electrode on a side of the negative electrode opposed to the positive electrode. The negative electrode terminal is positioned not to be opposed to the positive electrode terminal. The porous member is disposed in a region sandwiched by the positive electrode terminal and the negative electrode terminal. US 2004/180 259 A1 describes an electrode unit and a secondary battery having the electrode unit including a first electrode plate having a first electrode uncoated portion on at least one side of a first electrode collector coated with at least a first electrode active material, a second electrode plate having a second electrode uncoated portion on at least one side of a second electrode collector coated with at least a second electrode active material, and a separator interposed between the first electrode plate and the second electrode plate, wherein an insulating separator having at least two folds is located between the first electrode uncoated portion and the second electrode uncoated portion.
KR 2015 0 015 253 A provides a secondary battery that can prevent the damage of a separator caused by burr formed on the thickness of a coating part and the end part of a current collector in a process of cutting electrodes in which a current collector is coated with active materials. A secondary battery includes an electrode assembly formed by stacking a first electrode, a first separator, a second electrode and a second separator from the center in a sequence and by winding the same; a case having the electrode assembly; and a cap assembly connected to an opening part of the case wherein the first and the second separator surround the end parts of the first electrode and the second electrode in the center and are allowed to form a re-winding part installed between the first electrode and the second electrode in a diameter direction.
JP 2003 303 624 A describes a non-aqueous electrolyte secondary battery that comprises a wound electrode body that is wound in spiral form by interposing a separator, 18 between a positive electrode and a negative electrode of belt-shape formed with a mixture layer on the belt-shape current collector and a battery case in which this wound electrode body is housed. The top end in the winding direction of the separator is folded up on the top end in the winding direction of the mixture layer of the positive electrode or the negative electrode and overlapped with the top end of the separator or top end of the adjoining separator, and the separator is made two-ply to cover the top end of the mixture layer.

### [Detailed Description of the Invention]

### [Technical Problem]

The present invention has been made in an effort to provide a jelly-roll type electrode assembly whose design has been changed, and a secondary battery including the same.

However, the problem to be solved by the present invention is not limited to the above-mentioned problem, and other problems not mentioned will be apparently understood by one skilled in the art from the following description.

### [Technical Solution]

The invention is defined in the appended claims.

An embodiment of the present invention provides a jelly-roll type electrode assembly in which a first separator, a negative electrode, a second separator, and a positive electrode are sequentially stacked and wound, wherein the positive electrode has a first surface in a direction of a winding axis of the jelly-roll type electrode assembly, and a second surface opposite to the first surface, wherein a core part of the electrode assembly includes a separator overlapping portion between the positive electrode and the negative electrode facing the first surface of the positive electrode, and wherein the separator overlapping portion includes the separators that are overlapped and arranged and are in three or more folds, wherein the separator overlapping portion comprises a first interface at which the second separator and the second separator are in direct contact with each other, and a second interface at which the second separator and the first separator are in direct contact with each other, and wherein a friction coefficient of the first interface is **0.6** or greater, and wherein a friction coefficient of the second interface is **0.4** or greater, as measured in accordance with the ASTM D 1894 standard, and wherein the first separator and the second separator each comprise a coating layer provided on at least one surface thereof, and wherein the surface of each of the first separator and the second separator, on which the coating layer is provided, has a greater friction coefficient than that of a surface of each of the first separator and the second separator, on which the coating layer is not provided.

Another embodiment of the present invention provides a secondary battery including the jelly-roll type electrode assembly described above; and a battery case for accommodating the electrode assembly.

### [Advantageous Effects]

The jelly-roll type electrode assembly according to an embodiment of the present invention includes the separator overlapping portion in which a bending structure of a separator at a core part and a friction coefficient between interfaces are controlled, thereby suppressing sliding of the electrode during charging and discharging of the battery to prevent damage to the negative electrode and the separator from deformation of the electrode assembly due to contraction/expansion of the electrode. In addition, even when the separator is damaged, the separator overlapping portion can prevent an internal short between the positive electrode and the negative electrode to improve the battery stability and the life characteristics.

The effects of the present invention are not limited to the foregoing effects, and effects not mentioned will be apparently understood by one skilled in the art from the present specification and accompanying drawings.

### [Brief Description of Drawings]

FIGS. 1 and 2 show a jelly-roll type electrode assembly including a separator overlapping portion according to an embodiment of the present invention.
FIG. 3 schematically shows the separator overlapping portion of the jelly-roll type electrode assembly according to an embodiment of the present invention.
FIG. 4 is a CT image showing results of short-term cycle stability evaluation for secondary batteries according to Example 1 and Comparative Example 1.
FIG. 5 schematically shows a separator overlapping portion of the jelly-roll type electrode assembly according to an embodiment of the present invention.
FIG. 6 is a CT image showing results of short-term cycle stability evaluation for secondary batteries according to Examples 1 to 4.
FIG. 7 is a CT image showing results of long-term cycle stability evaluation for secondary batteries according to Example 1 and Comparative Example 1.
FIG. 8 is a graph showing results of long-term cycle stability evaluation for secondary batteries according to Example 1 and Comparative Example 1.
FIG. 9 shows a method for evaluating whether a separator at a core part of a jelly-roll type electrode assembly according to an embodiment of the present invention has been damaged.

### <Explanation of Reference Numerals and Symbols>

100: negative electrode
101: negative electrode current collector
102, 103: negative electrode active material layer
110: longitudinal end portion of negative electrode
200, 200': first separator
210: longitudinal end portion of first separator
201, 201': first separator base layer
202, 202': first separator coating layer
300: positive electrode
301: positive electrode current collector
302, 303: positive electrode active material layer
310: longitudinal end portion of positive electrode
400, 400': second separator
410: longitudinal end portion of second separator
401, 401': second separator base layer
402, 402': second separator coating layer
S separator overlapping portion
S1: first interface
S2: second interface
L, L': spacing distance between longitudinal end portion of separator overlapping portion and longitudinal end portion of positive electrode
E1: first extension line
E2: second extension line

### [Best Mode]

When one part "includes", "comprises" or "has" one constituent element throughout the present specification, unless otherwise specifically described, this does not mean that another constituent element is excluded, but means that another constituent element may be further included.

Throughout the present specification, when a member is referred to as being "on" another member, the member can be in direct contact with another member or an intervening member may also be present.

An embodiment of the present invention provides a jelly-roll type electrode assembly in which a first separator, a negative electrode, a second separator, and a positive electrode are sequentially stacked and wound, wherein the positive electrode has a first surface in a direction of a winding axis of the jelly-roll type electrode assembly, and a second surface opposite to the first surface, wherein a core part of the electrode assembly includes a separator overlapping portion between the positive electrode and the negative electrode facing the first surface of the positive electrode, and wherein the separator overlapping portion includes the separators that are overlapped and arranged and are in three or more folds, wherein the separator overlapping portion comprises a first interface at which the second separator and the second separator are in direct contact with each other, and a second interface at which the second separator and the first separator are in direct contact with each other, and wherein a friction coefficient of the first interface is **0.6** or greater, and wherein a friction coefficient of the second interface is **0.4** or greater, as measured in accordance with the ASTM D 1894 standard, and wherein the first separator and the second separator each comprise a coating layer provided on at least one surface thereof, and wherein the surface of each of the first separator and the second separator, on which the coating layer is provided, has a greater friction coefficient than that of a surface of each of the first separator and the second separator, on which the coating layer is not provided.

The jelly-roll type electrode assembly according to an embodiment of the present invention includes the separator overlapping portion, thereby suppressing sliding of the electrode during charging and discharging of the battery to prevent damage to the negative electrode and the separator from deformation of the electrode assembly due to contraction/expansion of the electrode. In addition, even when the separator is damaged, the separator overlapping portion can prevent an internal short between the positive electrode and the negative electrode to improve the battery stability and the life characteristics. Here, the 'core part' is a region including a hollow located on a winding axis of the electrode assembly, and a part of a laminated structure of the wound first separator/negative electrode/second separator/positive electrode, and may refer to a region within 2 turns of the positive electrode from one end portion, in the longitudinal direction, of the positive electrode located on the innermost side of the electrode assembly. In addition, the **'1** turn' may mean a length required to wind an electrode or separator included in an electrode assembly by 360° from a reference point, and the length may be determined depending on an outer diameter of a winding core used for winding the electrode assembly, a thickness of the electrode or separator, and the number of windings of the electrode or separator positioned on an inner side. For example, one turn of the positive electrode may mean a length required to wind the positive electrode by 360° from a longitudinal end portion of the positive electrode in a direction in which the jelly-roll type electrode assembly is wound.

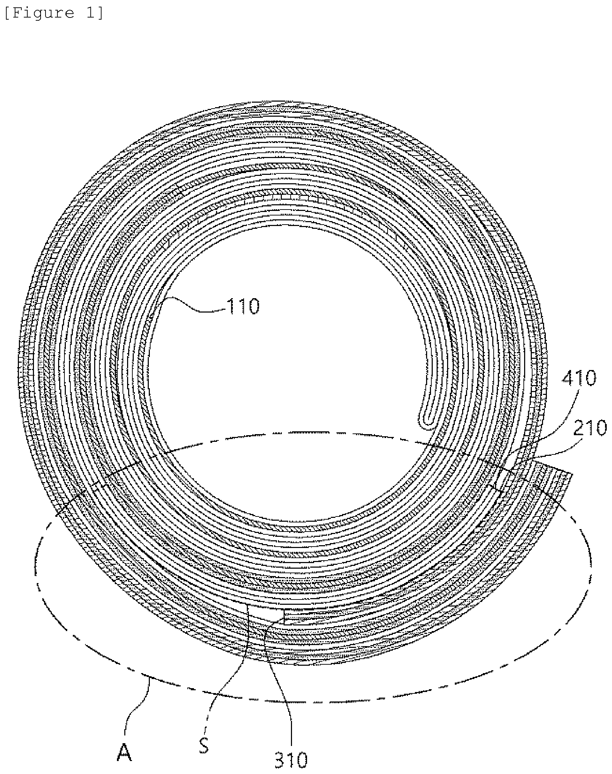

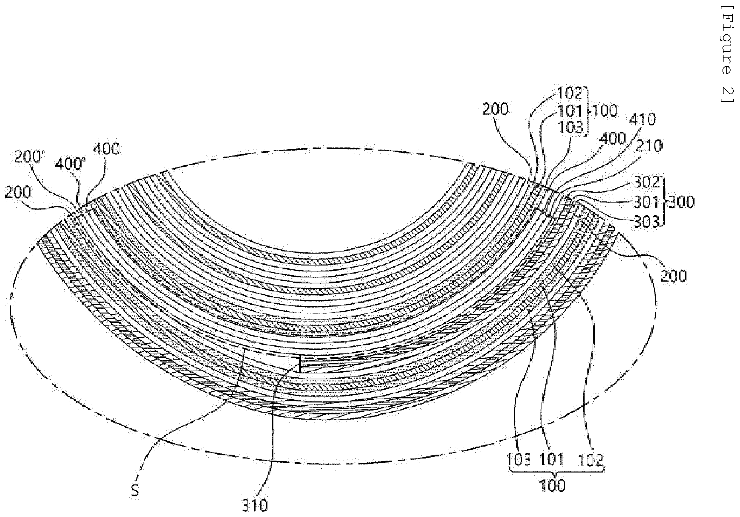

FIGS. 1 and 2 show a jelly-roll type electrode assembly including a separator overlapping portion according to an exemplary embodiment of the present invention. Specifically, FIG. 1 shows a jelly-roll type electrode assembly including a separator overlapping portion according to an exemplary embodiment of the present invention, and FIG. 2 is an enlarged view of a part A of FIG. 1.

According to an exemplary embodiment of the present invention, at the core part of the electrode assembly, the first separator, the negative electrode, and the second separator may extend longer than a longitudinal end portion of the positive electrode and may be additionally wound. Specifically, referring to FIGS. 1 and 2, the first separator 200, the negative electrode 100, and the second separator 400 may extend longer than a longitudinal end portion 310 of the positive electrode and may be additionally wound. That is, the first separator, the negative electrode, and the second separator are wound, which may be then wound together with the positive electrode. For example, after the first separator, the negative electrode, and the second separator are wound around a winding core by one or more turns, the first separator, the negative electrode, and the second separator may be wound together with the positive electrode. That is, at the core part of the jelly-roll type electrode assembly, longitudinal end portions 210, 110, and 410 of the first separator, the negative electrode, and the second separator may be positioned on inner sides with respect to a longitudinal end portion 310 of the positive electrode. In other words, a length and a width of the negative electrode may be greater than those of the positive electrode, and lengths and widths of the first separator and the second separator positioned on one surface and an opposite surface of the negative electrode may also be greater than those of the positive electrode. When the first separator, the negative electrode, and the second separator extend longer than the longitudinal end portion of the positive electrode and is additionally wound, lithium ions can be more easily transferred from the positive electrode to the negative electrode in a chemical reaction of the lithium-ion battery. When the length or width of the negative electrode is formed greater, an area of the negative electrode for receiving lithium ions increases to prevent a decrease in charge/discharge efficiency and to improve the battery stability and the lifetime characteristic.

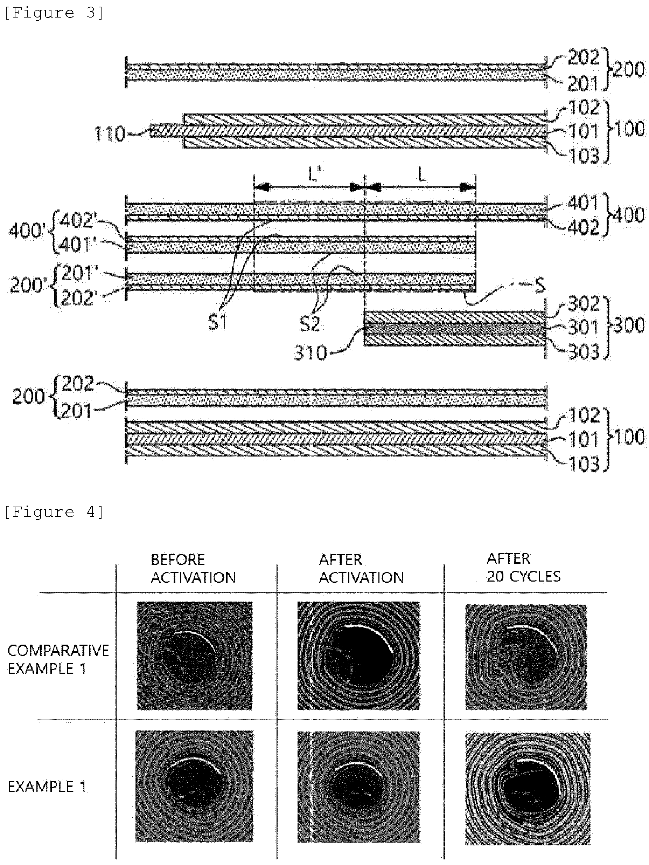

FIG. 3 schematically shows the separator overlapping portion of the jelly-roll type electrode assembly according to an exemplary embodiment of the present invention.

According to an exemplary embodiment of the present invention, the core part of the electrode assembly may include a separator overlapping portion between the positive electrode and the negative electrode facing a first surface of the positive electrode, and the separator overlapping portion includes the separators that are overlapped and arranged and are in three or more folds. Specifically, referring to FIGS. 1 to **3****,** the core part of the electrode assembly includes a separator overlapping portion S between the positive electrode 300 and the negative electrode 100 facing a first surface of the positive electrode, and the separator overlapping portion S may refer to a part of a region in which the separators that are overlapped and arranged are in three or more folds, with respect to the longitudinal end portion 310 of the positive electrode. Here, the separator overlapping portion S may refer to a region up to an end portion of a region in which the separators that are overlapped and arranged are in three or more folds, **i.e.,** a region up to a longitudinal end portion of the separator overlapping portion, and a region having the same length in a direction of the core part of the electrode assembly, with respect to the longitudinal end portion 310 of the positive electrode. Specifically, the separator overlapping portion S may refer to a region ranging from a longitudinal end portion of the separator overlapping portion S to a point at which a length L' in the direction of the core part of the electrode assembly with respect to the longitudinal end portion 310 of the positive electrode is the same as a spacing distance L between the longitudinal end portion of the separator overlapping portion and the longitudinal end portion of the positive electrode, i.e., a region having a length (L+L'=L+L=2L) from the longitudinal end portion of the separator overlapping portion S.

According to an exemplary embodiment of the present invention, the separator overlapping portion may be formed as the first separator and the second separator extending from a longitudinal end portion of the negative electrode at the core part of the electrode assembly are overlapped and arranged. Specifically, referring to FIGS. 1 to 3, the separator overlapping portion S may be formed as the first separator 200' and the second separator 400' extending from a longitudinal end portion 110 of the negative electrode at the core part of the electrode assembly are overlapped and arranged, and the first separator 200 and the second separator 400 may include a region extending from the longitudinal end portion 110 of the negative electrode. That is, the first separator 200 and the second separator 400 may extend longer than the longitudinal end portion 110 of the negative electrode and may be additionally wound. In other words, the first separator 200 and the second separator 400 are wound by a predetermined length, which may be then wound together with the negative electrode 100. That is, the first separator 200' and the second separator 400' extending from the longitudinal end portion 110 of the negative electrode may be parts of the first separator 200 and the second separator 400 wound earlier than the negative electrode 100, and may be bent, overlapped and arranged to form the separator overlapping portion S. That is, the separator overlapping portion can be formed by the bending structure integrally extending from the first separator and the second separator, without providing a separate auxiliary separator. Through this, the separator constituting the separator overlapping portion can be controlled to be in three or more folds by the simpler structure. In addition, when the separator overlapping portion is formed by overlapping and arranging the first separator and the second separator extending from the longitudinal end portion of the negative electrode, it is possible to prevent damage to the negative electrode and the separator from deformation of the electrode assembly due to contraction/expansion of the electrode. In addition, even when the separator is damaged, the separator overlapping portion can prevent an internal short between the positive electrode and the negative electrode to improve the battery stability and the life characteristics.

According to an exemplary embodiment of the present invention, the first separator and the second separator may extend from the longitudinal end portion of the negative electrode at the core part of the electrode assembly, may be bent together in a direction opposite to a direction facing a winding axis of the negative electrode, and may be overlapped and arranged between the positive electrode and the second separator facing the first surface of the positive electrode. Specifically, referring to FIGS. 1 and 2, the first separator 200' and the second separator 400' extending from the longitudinal end portion 110 of the negative electrode may be bent together in an opposite direction to a direction facing a winding axis of the negative electrode, i.e., toward the longitudinal end portion 310 of the positive electrode, and may be overlapped and arranged to form the separator overlapping portion S between the positive electrode 300 and the negative electrode 100 facing the first surface of the positive electrode. Through this, it is possible to more easily control the facing direction of the separators constituting the separator overlapping portion while allowing the separators constituting the separator overlapping portion to be in three or more folds by the simpler bending structure.

According to the present invention, the separator overlapping portion includes a first interface at which the second separator and the second separator are in direct contact with each other, and a second interface at which the second separator and the first separator are in direct contact with each other. Specifically, referring to FIG. 3, the separator overlapping portion S may include the separators that are overlapped and arranged and are in three or more folds, may include one or more of each of the first separators 200 and 200' and the second separators 400 and 400', and may include a first interface S1 at which the second separator 400 and the second separator 400' are in direct contact with each other, and a second interface S2 at which the second separator 400' and the first separator 200' are in direct contact with each other. In other words, the separator overlapping portion may include an overlapping structure of a plurality of separators such as the first separator and the second separator, rather than an overlapping structure of a single separator, and may include the interfaces at each of which the separators are in contact with each other. Since the separator overlapping portion includes the plurality of interfaces, it is possible to easily control the facing direction of the separators and the friction coefficient of each interface by the simpler bending structure.

According to an exemplary embodiment of the present invention, the first interface and the second interface each may have a friction coefficient of 0.4 or greater. Specifically, referring to FIG. 3, the friction coefficients of the first interface S1 and the second interface S2 may be 0.42 or greater, 0.44 or greater, or 0.46 or greater, respectively. In other words, the separator overlapping portion includes the overlapping structure of the plurality of separators such as the first separator and the second separator, rather than an overlapping structure of a single separator, and includes a plurality of interfaces at each of which the separators are in contact with each other, and in this case, the friction coefficients of the plurality of interfaces may be each controlled beyond a specific range. When the friction coefficients of the first interface and the second interface satisfy the above range, it is possible to suppress the sliding of the positive electrode by the first separator and the second separator integrally formed with the separator overlapping portion during charging and discharging of the battery, and to prevent damage to the negative electrode and the separator from deformation of the electrode assembly due to contraction/expansion of the electrode. Here, the friction coefficient (µ) may refer to a static friction coefficient measured in accordance with the ASTM D 1894 standard, may be measured in a dry method, and may have a larger value when measured by a wet method of immersing a specimen in distilled water or an electrolyte solution.

According to the present invention, the friction coefficient of the first interface is 0.6 or greater, and the friction coefficient of the second interface is 0.4 or greater. Specifically, referring to FIG. 3, the friction coefficients of the first interface S1 and the second interface S2 may be different from each other depending on a type and a facing direction of the first separators 200 and 200' and the second separators 400 and 400' facing each other. More specifically, the friction coefficient of the first interface S1 may be 0.62 or greater, 0.64 or greater, or 0.66 or greater, and the friction coefficient of the second interface S2 may be 0.42 or greater, 0.44 or greater, or 0.46 or greater. When the friction coefficients between the interfaces of the separators included in the separator overlapping portion are controlled within the above ranges, it is possible to suppress the sliding of the electrode during charging and discharging of the battery, to prevent damage to the negative electrode and the separator from deformation of the electrode assembly due to contraction/expansion of the electrode. In addition, even when the separator is damaged, the separator overlapping portion can prevent an internal short between the positive electrode and the negative electrode to improve the battery stability and the life characteristics.

According to an exemplary embodiment of the present invention, the jelly-roll type electrode assembly may include a plurality of separators. For example, the jelly-roll type electrode assembly may have a structure in which a first separator/a negative electrode/a second separator/a positive electrode are sequentially stacked. The separators 200 and 400 serve to separate the negative electrode 100 and the positive electrode 300 and to provide a movement path of lithium ions, in which any separator may be used as the separator without particular limitation as long as the separator is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. In addition, the separator may typically have a thickness of 10 µm or more and 20 µm or less. A separator in which the above-described separator material is used as a base layer and a slurry containing a ceramic component or a polymer material so as to secure heat resistance or mechanical strength is coated on the base layer may be used. The separator having a single layer or multilayer structure may be selectively used.

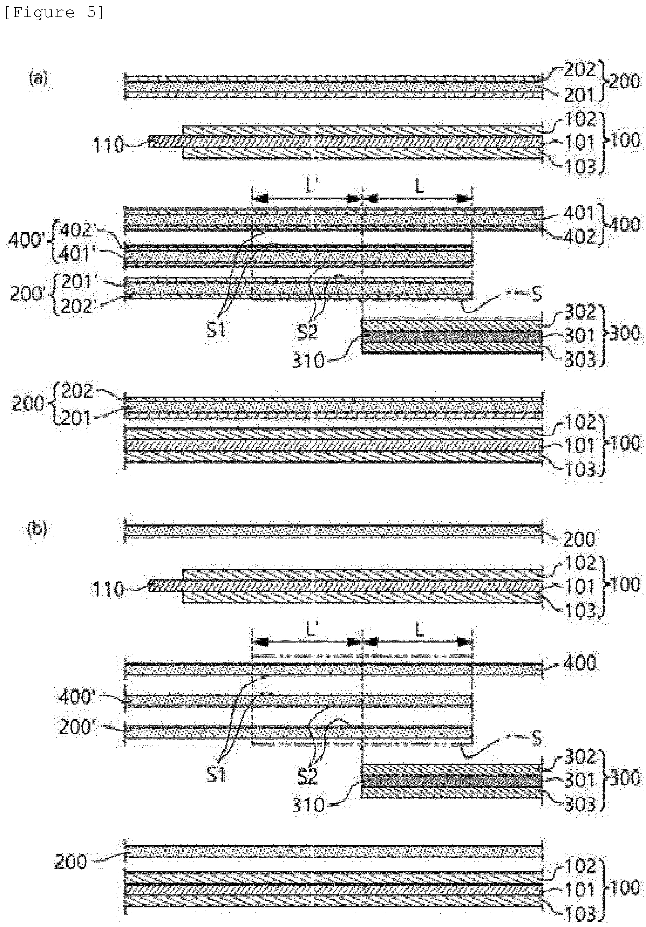

FIG. 5 schematically shows a separator overlapping portion of the jelly-roll type electrode assembly according to an exemplary embodiment of the present invention. Specifically, FIG. 5(a) schematically shows a separator overlapping portion of a jelly-roll type electrode assembly including a first separator and a second separator each having coating layers on both surfaces, and FIG. 5(b) schematically shows a separator overlapping portion of a jelly-roll type electrode assembly including a first separator and a second separator without a coating layer.

According to the present invention, each of the first separator and the second separator includes a coating layer provided on at least one surface thereof. Specifically, referring to FIGS. 3 and 5(a), the first separators 200 and 200' and the second separators 400 and 400' may include the coating layers 202, 202', 402 and 402' provided on at least one surface thereof, respectively, and the base layers 201, 201', 401 and 401' may each have a friction coefficient within a specific range by controlling a component, a content, and a particle size of the coating layer. Specifically, a friction coefficient between the coating layer and the coating layer and a friction coefficient between the base layer and the base layer of the separator may be greater than a friction coefficient between the coating layer and the base layer. In addition, the friction coefficients may be measured in a dry method, but may have a more significant difference when immersed in distilled water or an electrolyte solution, i.e., when measured in a wet method.

In the case of including the coating layer provided on at least one surface of each of the first separator and the second separator, the friction coefficient between the interfaces of the separators included in the separator overlapping portion is controlled to a specific range by controlling the facing direction of the coating layers provided on at least one surface of each of the first separator and the second separator, so that it is possible to suppress the sliding of the electrode during charging and discharging of the battery, and to prevent damage to the negative electrode and the separator from deformation of the electrode assembly due to contraction/expansion of the electrode.

According to an exemplary embodiment of the present invention, each of the first separator and the second separator may include a coating layer provided on at least one surface thereof, and the coating layer may include an inorganic component, a binder component, and a lithium salt. When the separators include the components described, the increase in internal resistance is not caused by the elution of the lithium salt contained in the coating layer, despite the fact that the binder for improving adhesion with the electrode and the inorganic component for improving the mechanical strength of the separator are included, so excellent cell stability is obtained.

In addition, since the electrolyte solution impregnation level of the electrode facing the separator can be increased, advantageous performance in terms of long life may be obtained. Specifically, the coating layer may include the inorganic component, and the coating layer including the inorganic component is advantageous in terms of thermal shrinkage, as compared with a separator made of a simple polymer material. Therefore, the separator including the inorganic component may have better high-temperature safety.

Specifically, the lithium salt may be substantially the same as that contained in an electrolyte solution of a lithium secondary battery, and may be, for example, one or two or more selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂) 2NLi, lithium chloroborane, lithium lower aliphatic carboxylate, lithium tetraphenyl borate.

The inorganic component is not particularly limited as long as it does not cause an oxidation and/or reduction reaction, i.e., an electrochemical reaction with a positive electrode or negative electrode current collector within an operating voltage range of the battery (e.g., 0 to 5 V based on Li/Li⁺) and does not impair conductivity, and may be, for example, one or two or more selected from the group consisting of BaTiO₃, Pb(Zr,Ti)O₃ (PZT), Pb₁₋ₓLaₓZr_{1-y}Ti_{y}O₃ (PLZT), Pb(Mg₃Nb_{2/3})O₃⁻PbTiO₃(PMN-PT), hafnia (HfO₂), SrTiO₃, SnO₂, CeO₂, MgO, NiO, CaO, ZnO, ZrO₂, Y₂O₃, Al₂O₃, and TiO₂.

The binder is not particularly limited as long as it is not easily dissolved by the electrolyte solution while exhibiting a bonding force with an electrode stacked on the separator and a bonding force between an inorganic component and a lithium salt in the mixed coating layer. For example, the binder may be one or a mixture of two or more selected from the group consisting of polyvinylidenefluoride (PVdF); polyvinylidenefluoride-co-hexafluoropropylene;polyvinylidenefluoride-co-trichloroethylene; polyvinylidenefluoride chlorotrifluoroethylene(PVdF-CTFE); polymethyl methacrylate; polyacrylonitrile; polyvinylpyrrolidone; polyvinylacetate; polyethylene-co-vinylacetate copolymer; polyethyleneoxide; cellulose acetate; cellulose acetate butyrate; cellulose acetate propionate; cyanoethylpullulan; cyanoethyl polyvinylalcohol; cyanoethyl cellulose; cyanoethyl sucrose; pullulan; carboxylmethyl cellulose; acrylonitrile-styrene-butadiene copolymer; and polyimide, and preferably may be PVdF or PVdF-CTFE.

According to the present invention, the first separator and the second separator may each include a coating layer provided on at least one surface thereof, and the surfaces of the first separator and the second separator provided with the coating layer have a friction coefficient greater than that of surfaces of the first separator and the second separator not provided with a coating layer. Specifically, referring to FIG. 3, the first separators 200 and 200' and the second separators 400 and 400' may have coating layers 202, 202', 402 and 402' provided on one surface, respectively. In addition, the surface of the first separator and the second separator provided with the coating layer may have a greater friction coefficient than the surface of the first separator and the second separator not provided with a coating layer. That is, the coating layer may increase the friction coefficient of the interface when provided on the separator. The friction coefficient between the interfaces of the separators included in the separator overlapping portion is controlled to a specific range by controlling the facing direction of the coating layers provided on one surface of each of the first separator and the second separator, so that it is possible to suppress the sliding of the electrode during charging and discharging of the battery, and to prevent damage to the negative electrode and the separator from deformation of the electrode assembly due to contraction/expansion of the electrode.

According to an exemplary embodiment of the present invention, each of the first separator and the second separator may include a coating layer provided on one surface thereof. Specifically, referring to FIG. 3, the first separators 200 and 200' and the second separators 400 and 400' may include the coating layers 202, 202', 402 and 402' provided on one surface thereof, and the base layer 201, 201', 401 and 401', respectively, and may each have a friction coefficient within a specific range by controlling a component, a content, and a particle size of the coating layer.

In the case of including the coating layer provided on one surface of each of the first separator and the second separator, the friction coefficient between the interfaces of the separators included in the separator overlapping portion is controlled to a specific range by controlling the facing direction of the coating layers provided on one surface of each of the first separator and the second separator, so that it is possible to suppress the sliding of the electrode during charging and discharging of the battery, and to prevent damage to the negative electrode and the separator from deformation of the electrode assembly due to contraction/expansion of the electrode.

According to an exemplary embodiment of the present invention, the first separator and the second separator may each include a coating layer provided on one surface thereof, and the first interface may be an interface at which the coating layer of the second separator and the coating layer of the second separator are in direct contact with each other. Specifically, referring to FIG. 3, the first separators 200 and 200' and the second separators 400 and 400' may have coating layers 202, 202', 402 and 402' provided on one surface thereof, respectively, and the first interface (S1) may be an interface at which the coating layer 402 of the second separator and the coating layer 402' of the second separator are in direct contact with each other. When the coating layer of the second separator and the coating layer of the second separator are in direct contact with each other, the friction coefficient between the coating layer and the coating layer of the separator may be greater than the friction coefficient between the base layer and the base layer or the friction coefficient between the coating layer and the base layer, and the friction coefficient of the first interface may have a larger value. When the coating layer of the second separator and the coating layer of the second separator are in direct contact at the first interface, the friction coefficient between the interfaces of the separators included in the separator overlapping portion increases, so that it is possible to suppress the sliding of the electrode during charging and discharging of the battery, and thus, to prevent damage to the negative electrode and the separator from deformation of the electrode assembly due to contraction/expansion of the electrode.

According to an exemplary embodiment of the present invention, the first separator and the second separator may each include a coating layer provided on one surface thereof, and the second interface may be an interface at which a surface of the second separator not provided with a coating layer and a surface of the first separator not provided with a coating layer are in direct contact with each other. Specifically, referring to FIG. 3, the first separators 200 and 200' and the second separators 400 and 400' may have coating layers 202, 202', 402 and 402' provided on one surface thereof, respectively, and the second interface (S2) may be an interface at which a surface of the second separator not provided with a coating layer, i.e., the second separator base layer 401', and a surface of the first separator not provided with a coating layer, i.e., the first separator base layer 201' are in direct contact with each other. When a surface of the second separator not provided with a coating layer and a surface of the first separator not provided with a coating layer are in direct contact with each other, the friction coefficient between the base layer and the base layer of the separator may be greater than the friction coefficient between the coating layer and the base layer, and the friction coefficient of the second interface may have a larger value. When the surface of the second separator not provided with a coating layer and the surface of the first separator not provided with a coating layer are in direct contact with each other at the second interface, the friction coefficient between the interfaces of the separators included in the separator overlapping portion increases, so that it is possible to suppress the sliding of the electrode during charging and discharging of the battery, and thus, to prevent damage to the negative electrode and the separator from deformation of the electrode assembly due to contraction/expansion of the electrode.

According to an exemplary embodiment of the present invention, the first interface may be an interface at which the second separator facing the first surface of the positive electrode and the second separator extending from the longitudinal end portion of the negative electrode at the core part of the electrode assembly are in direct contact with each other. Specifically, referring to FIGS. 1 to 3, the second separator 400' extending from the longitudinal end portion 110 of the negative electrode may be overlapped and arranged to form the separator overlapping portion S between the positive electrode 300 and the negative electrode 100 facing the first surface of the positive electrode. In this case, since the second separator 400 is positioned between the positive electrode 300 and the negative electrode 100 facing the first surface of the positive electrode, the extended second separator 400' may be in direct contact with the second separator 400 positioned between the positive electrode 300 and the negative electrode 100. That is, the first interface S1 at which the second separator 400 and the second separator 400' extending from the longitudinal end portion 110 of the negative electrode at the core part of the electrode assembly are in direct contact with each other may be formed. Through this, it is possible to more easily control the facing direction of the separators constituting the separator overlapping portion and the frictional force at the interface while allowing the separators constituting the separator overlapping portion to be in three or more folds by the simpler bending structure.

According to an exemplary embodiment of the present invention, the second interface may be an interface at which the first separator extending from the longitudinal end portion of the negative electrode at the core part of the electrode assembly and the second separator extending from the longitudinal end portion of the negative electrode at the core part of the electrode assembly are in direct contact with each other. Specifically, referring to FIGS. 1 to **3****,** the first separator 200' extending from the longitudinal end portion 110 of the negative electrode and the second separator 400' extending from the longitudinal end portion of the negative electrode may be overlapped and arranged to form the separator overlapping portion S between the positive electrode 300 and the negative electrode 100 facing the first surface of the positive electrode. In this case, the second interface S2 at which the first separator 200' extending from the longitudinal end portion 110 of the negative electrode and the second separator 400' extending from the longitudinal end portion 110 of the negative electrode are in direct contact with each other may be formed. Through this, it is possible to more easily control the facing direction of the separators constituting the separator overlapping portion and the frictional force at the interface while allowing the separators constituting the separator overlapping portion to be in three or more folds by the simpler bending structure.

According to an exemplary embodiment of the present invention, a length of the separator overlapping portion in the longitudinal direction may be 30% or more based on 100% of a circumference of the electrode assembly. Specifically, the length of the separator overlapping portion in the longitudinal direction may be 40% or more or 50% or more based on 100% of the circumference of the electrode assembly, or may be 1/3 turn or more or 1/2 turn or more of an inner circumferential surface of the core part of the electrode assembly.

Here, the circumference of the electrode assembly may refer to a circumference of the inner circumferential surface of the electrode assembly, and the 'circumference of the inner circumferential surface' may refer to a circumference of a virtual circle having the largest value as a radius among distances from the winding axis of the electrode assembly to the innermost layer in contact with the hollow of the electrode assembly. For example, the circumference of the inner circumferential surface of the electrode assembly may be about 10 mm, but is not limited thereto.

In addition, referring to FIG. 3, the length, in the longitudinal direction, of the separator overlapping portion may refer to a length of L+L'=L+L=2L. That is, the first separator extending from the longitudinal end portion of the negative electrode at the core part of the electrode assembly and the second separator extending from the longitudinal end portion of the negative electrode at the core part of the electrode assembly may be arranged over 1/6 turn or more or 1/4 turn or more from the longitudinal end portion of the positive electrode between the positive electrode and the negative electrode facing the first surface of the positive electrode, and in this case, the length, in the longitudinal direction, of the separator overlapping portion may be 1/3 turn or more or 1/2 turn or more. When the length range, in the longitudinal direction, of the separator overlapping portion is satisfied, the frictional force between the interfaces of the separators included in the separator overlapping portion can suppress the sliding of the electrode during charging and discharging of the battery, thereby sufficiently preventing damage to the negative electrode and the separator from deformation of the electrode assembly due to contraction/expansion of the electrode.

According to an exemplary embodiment of the present invention, a spacing distance between the longitudinal end portion of the separator overlapping portion and the longitudinal end portion of the positive electrode may be 3 mm or longer. Specifically, referring to FIG. 3, a spacing distance L between the longitudinal end portion of the separator overlapping portion and the longitudinal end portion of the positive electrode may be 4 mm or longer, 5 mm or longer, or 6 mm or longer.

That is, the first separator 200' extending from the longitudinal end portion 110 of the negative electrode at the core part of the electrode assembly and the second separator 400' extending from the longitudinal end portion 110 of the negative electrode at the core part of the electrode assembly may be arranged over 3 mm or longer from the longitudinal end portion 310 of the positive electrode between the positive electrode 300 and the negative electrode 100 facing the first surface of the positive electrode.

When the above-described length range in the longitudinal direction of the separator overlapping portion is satisfied, even when there is a process error with respect to introduction of the first separator and the second separator, the separator overlapping portion can be arranged between the positive electrode and the negative electrode facing the first surface of the positive electrode. In addition, the frictional force between the interfaces of the separators included in the separator overlapping portion can suppress the sliding of the electrode during charging and discharging of the battery, thereby sufficiently preventing damage to the negative electrode and the separator from deformation of the electrode assembly due to contraction/expansion of the electrode.

According to an exemplary embodiment of the present invention, the positive electrode may include a positive electrode current collector and a positive electrode active material layer provided on the positive electrode current collector. Specifically, referring to FIG. 3, the positive electrode 300 may include a positive electrode current collector 301 and positive electrode active material layers 302 and 303 formed on one surface or both surfaces of the positive electrode current collector 301 and including a positive electrode active material. In other words, the positive electrode active material layer is formed on a positive electrode coating portion of the positive electrode current collector, and a surface not provided with the positive electrode active material layer may be referred to as a positive electrode uncoated portion.

According to an exemplary embodiment of the present invention, the positive electrode current collector may include a positive electrode coating portion coated with a positive electrode active material and a positive electrode uncoated portion not coated with the positive electrode active material, and may include a tab on the positive electrode uncoated portion. Specifically, the positive electrode current collector may include a positive electrode uncoated portion, and a positive electrode tab provided on the positive electrode uncoated portion. According to an exemplary embodiment of the present invention, the electrode assembly may include a positive electrode, a separator and a negative electrode stacked and wound, and the positive electrode may include a positive electrode current collector, and a positive electrode active material layer provided on at least one surface of the positive electrode current collector and having a longitudinal end portion at the same position as the positive electrode current collector. Specifically, referring to FIGS. 3 the electrode assembly may include a positive electrode 300, separators 200 and 400 and a negative electrode 100 stacked and wound, and the positive electrode 300 may include a positive electrode current collector 301, and positive electrode active material layers 302 and 303 provided on at least one surface of the positive electrode current collector 301 and each having a longitudinal end portion 310 at the same position as the positive electrode current collector 301. In other words, one end portion 310, in the longitudinal direction, of the positive electrode may have a free-edge form. With this, an area of an unnecessary uncoated portion on the positive electrode current collector can be reduced to secure economic efficiency, and a slitting process can be performed after forming an active material layer on an electrode, so that a roll-to-roll process including the slitting process and a winding process can be performed more efficiently. Here, the description 'same position' means that the end portions in the longitudinal direction are the same, and may include a case where the end portions are formed at substantially the same positions due to a process error that may occur in the slitting process or the like.

According to an exemplary embodiment of the present invention, the positive electrode current collector is not particularly limited as long as it has conductivity without inducing a chemical change in the battery. Specifically, for example, for the positive electrode current collector, stainless steel, aluminum, nickel, titanium, fired carbon, aluminum or stainless steel each surface treated with carbon, nickel, titanium, silver, or the like, or the like may be used. That is, the positive electrode current collector may be provided in the form of surface-treated stainless steel, an aluminum foil or the like.

In addition, the positive electrode current collector may typically have a thickness of 3 to 50 µm, and a surface of the current collector may be formed with microscopic irregularities to enhance adhesion of the positive electrode active material. For example, the positive electrode current collector may be used in various forms such as a film, a sheet, a foil, a net, a porous body, a foamed body, and a non-woven fabric body.

According to an exemplary embodiment of the present invention, the positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li₁₊ₓMn₂₋ₓO₄ (0≤x≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; Ni-site type lithium nickel oxide represented by chemical formula LiNi_{1-y}M_{y}O₂ (where M is at least one selected from the group consisting of Co, Mn, Al, Cu, Fe, Mg, B, and Ga, and satisfies 0.01≤y≤0.3); a lithium manganese composite oxide represented by chemical formula LiMn_{2-z}M_{z}0₂ (where M is at least one selected from the group consisting of Co, Ni, Fe, Cr, Zn and Ta, and satisfies 0.01≤z≤0.1) or Li₂Mn₃MO₈ (where M is at least one selected from the group consisting of Fe, Co, Ni, Cu and Zn.); LiMn₂O₄ in which a part of Li of the chemical formula is substituted with an alkaline earth metal ion, or the like, but is not limited thereto. The positive electrode may be Li metal.

According to an exemplary embodiment of the present invention, the positive electrode active material layer may further include a positive electrode conductive material and a positive electrode binder. The positive electrode conductive material is used to impart conductivity to the electrode, and can be used without particular limitation as long as it does not cause a chemical change and has electronic conductivity in a battery to be configured. Specific examples of the positive electrode conductive material may include graphite such as natural graphite or artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, and the like, and any one thereof or a mixture of two or more thereof may be used.

In addition, the positive electrode binder serves to improve attachment between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated-EPDM, styrene butadiene rubber (SBR), fluoro rubber, or various copolymers thereof, and the like, and any one thereof or a mixture of two or more thereof may be used.

According to an exemplary embodiment of the present invention, the negative electrode may include a negative electrode current collector and a negative electrode active material layer provided on the negative electrode current collector. Specifically, referring to FIG. **3****,** the negative electrode 100 may include a negative electrode current collector 101 and negative electrode active material layers 102 and 103 formed on one surface or both surfaces of the negative electrode current collector 101 and including a negative electrode active material. In other words, the negative electrode active material layer is formed on a negative electrode coating portion of the negative electrode current collector, and a surface not provided with the negative electrode active material layer may be referred to as a negative electrode uncoated portion.

According to an exemplary embodiment of the present invention, the negative electrode current collector may include a negative electrode coated portion formed with a negative electrode active material layer and a negative electrode uncoated portion not formed with the negative electrode active material layer, and may include a tab on the negative electrode uncoated portion. Specifically, the negative electrode current collector may include a negative electrode uncoated portion, and a negative electrode tab provided on the negative electrode uncoated portion. Accordingly, the manufactured electrode assembly may include one or more negative electrode tabs.

According to an exemplary embodiment of the present invention, the negative electrode active material layer may include a negative electrode active material including one or more selected from the group consisting of a silicon-based material and a carbon-based material. In addition, the negative electrode active material layer may further include a negative electrode conductive material and a negative electrode binder, and for the negative electrode active material, the negative electrode conductive material, and the negative electrode binder, materials that are used in the art may be used without limitation.

According to an exemplary embodiment of the present invention, the negative electrode current collector is not particularly limited as long as it has conductivity without causing a chemical change in the battery. For example, for the negative electrode current collector, copper, stainless steel, aluminum, nickel, titanium, fired carbon, aluminum or stainless steel each surface treated with carbon, nickel, titanium, silver, or the like, of the like may be used. Specifically, transition metals that adsorb carbon well, such as copper and nickel, may be used for the negative electrode current collector. A thickness of the negative electrode current collector may be 6 µm or more and 80 µm or less. However, the thickness of the negative electrode current collector is not limited thereto.

According to an exemplary embodiment of the present invention, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

According to an exemplary embodiment of the present invention, the negative electrode conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

An exemplary embodiment of the present invention provides a secondary battery including the jelly-roll type electrode assembly described above, and a battery case for accommodating the electrode assembly. Specifically, the secondary battery may include the electrode assembly according to an exemplary embodiment described above and a battery case for accommodating the electrode assembly.

The secondary battery according to the present invention includes the separator overlapping portion where the bending structure of the separator of the core part and the friction coefficient between the interfaces are controlled, so that even when the electrode assembly is deformed due to contraction/expansion of the electrode during charging and discharging of the battery, an internal short between the positive electrode and the negative electrode can be prevented to improve the battery stability and the life characteristics.

According to an exemplary embodiment of the present invention, the battery case may have a cylindrical shape. Specifically, the battery case may have a cylindrical, prismatic, or pouch shape depending on use applications. However, the battery case having a cylindrical shape may be more suitable for accommodating a jelly-roll type electrode assembly. When the battery case has a cylindrical shape, a shape of a secondary battery including the jelly-roll type electrode assembly and a battery case for accommodating the electrode assembly may have a cylindrical shape.

According to an exemplary embodiment of the present invention, the battery case may include an electrolyte therein. Specifically, the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but is not limited thereto. Specifically, the electrolyte may include a non-aqueous organic solvent and a metal salt.

According to an exemplary embodiment of the present invention, as the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

According to an exemplary embodiment of the present invention, a lithium salt may be used as the metal salt, and the lithium salt is a material that is readily soluble in the non-aqueous electrolyte solution, in which, for example, one or more species selected from the group consisting of F⁻, Cl⁻, I⁻, NO₃⁻, N(CN)²⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

According to an exemplary embodiment of the present invention, one or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving the lifetime characteristic of the battery, suppressing a decrease in battery capacity, improving discharge capacity of the battery, and the like, in addition to the above-described electrolyte components.

Below, Examples will be described in detail to specifically describe the present invention. However, the Examples according to the present invention may be modified in other forms, and the scope of the present invention is not construed as being limited to the following Examples. The Examples of the present specification are provided to more completely explain the present invention to one skilled in the art.

### Examples

### Example 1

### Preparation of Electrode Assembly

A positive electrode having a thickness of 154 µm was prepared by preparing an Al foil having a thickness of 15 µm and a length of 63.9 mm in the width direction as a positive electrode current collector, and applying and drying a positive electrode active material slurry including an NMCA (Ni-Mn-Co-Al) composite having a Ni content of 92% or more as a positive electrode active material and CNTs as a conductive material on the positive electrode current collector to form a positive electrode active material layer.

Next, a negative electrode having a thickness of 187 µm was prepared by preparing a Cu foil having a thickness of 8 µm and a length of 65.1 mm in the width direction as a negative electrode current collector, and applying and drying a negative electrode active material slurry including artificial graphite and natural graphite as negative electrode active materials in 50 parts by weight, respectively, on the negative electrode current collector to form a negative electrode active material layer.

On the other hand, two separators each having a coating layer including Al₂O₃ as an inorganic component, a PVdF-based binder as a binder component, and a lithium salt and formed on one surface of a sheet-like polyethylene base layer were prepared as the first separator and the second separator, respectively.

Before winding a jelly-roll type electrode assembly, the base layers of the first separator and the second separator were overlapped to face each other, and the first separator and the second separator were provided with extensions by lengths corresponding to about 3 turns of the winding core in a direction opposite to the winding direction. In this case, as the winding core, a core with a circumference of the outer circumferential surface of about 10 mm was used.

Then, the points corresponding to 3 turns of the winding core from the longitudinal end portions of the first separator and the second separator were folded back in the winding direction to start winding, and the negative electrode and the positive electrode were sequentially introduced to prepare a jelly-roll type electrode assembly. In this case, the core part of the jelly-roll type electrode assembly was formed to have a structure shown in FIGS. 1 and 2 by interposing the extensions of the first separator and the second separator between one surface of the positive electrode in the direction of the winding axis and the second separator positioned on one surface of the negative electrode to provide a separator overlapping portion. In this case, the spacing distance (L) between the longitudinal end portion of the separator overlapping portion and the longitudinal end portion of the positive electrode was 3 mm, and the length (L+L'=2L), in the longitudinal direction, of the separator overlapping portion was controlled to be 6 mm. The circumference of the inner circumferential surface of the prepared jelly-roll type electrode assembly was about 10 mm.

### Preparation of Secondary Battery

A secondary battery was prepared by inserting the jelly-roll type electrode assembly into a cylindrical battery case, injecting an electrolyte solution in which ethylene carbonate (EC), dimethyl carbonate (DMC), and ethyl methyl carbonate (EMC) were mixed at a weight ratio of 4:9:3 and LiPF₆ was dissolved to be 15 wt% and sealing the cylindrical battery can with a cap assembly.

### Example 2

A jelly-roll type electrode assembly and a secondary battery were prepared in the same manner as in Example 1, except that two separators each having a coating layer including Al₂O₃ as an inorganic component, a PVdF-based binder as a binder component, and a lithium salt and formed on both surfaces of a sheet-like polyethylene base layer were used as the first separator and the second separator.

### Example 3

A jelly-roll type electrode assembly and a secondary battery were prepared in the same manner as in Example 1, except that two separators in which a coating layer was not formed on both surfaces of a sheet-like polyethylene base layer were used as the first separator and the second separator.

### Example 4

A jelly-roll type electrode assembly and a secondary battery were prepared in the same manner as in Example 1, except that the spacing distance (L) between the longitudinal end portion of the separator overlapping portion and the longitudinal end portion of the positive electrode was 1.5 mm and the length (L+L'=2L), in the longitudinal direction, of the separator overlapping portion was controlled to be 3 mm.

### Comparative Example 1

A jelly-roll type electrode assembly and a secondary battery were prepared in the same manner as in Example 1, except that the separator overlapping portion was not provided.

### Experimental Examples

### Experimental Example 1 - Friction Coefficient Evaluation

The friction coefficients (µ) between the coating layer and the coating layer, between the coating layer and the base layer, and between the base layer and the base layer of the first separator and the second separator were measured in accordance with the ASTM D 1894 standard. In this case, after measuring the friction coefficient in the dry method, the same specimen was immersed in the electrolyte solution for 60 minutes, and then the friction coefficient was remeasured in the wet method, and the result is shown in Table 1 below.

**[Table 1]**

| | Facing direction of separators | | |
|---|---|---|---|
| | coating layer - coating layer | base layer - base layer | coating layer - base layer |
| friction coefficient (dry) | 0.68 | 0.41 | 0.44 |
| friction coefficient (wet) | 0.81 | 0.45 | 0.44 |

Referring to Table 1, it was confirmed that the friction coefficient between the coating layer and the coating layer of the first separator and the second separator had a larger value than the friction coefficient between the base layer and the base layer or between the coating layer and the base layer. In addition, it was confirmed that the friction coefficient measured in the wet state had a larger value than the friction coefficient measured in the dry state. Specifically, it was confirmed that the friction coefficient between the base layer and the base layer had a relatively low value as compared with the friction coefficient between the coating layer and the base layer, but in a wet state, which is an internal environment of the secondary battery to be manufactured, the friction coefficient between the base layer and the base layer had a larger value. Through this, it can be seen that, when immersed in distilled water or electrolyte solution, the friction coefficient between the coating layer and the coating layer and the friction coefficient between the base layer and the base layer of the first separator and the second separator had larger values than the friction coefficient between the coating layer and the base layer. In addition, it can be seen that the friction coefficient between the interfaces of the separators included in the separator overlapping portion can be controlled within a specific range by controlling the facing direction of the coating layers provided on one surface of each of the first separator and the second separator.

### Experimental Example 2 - Core Impingement Evaluation

### Short-term Cycle Stability Evaluation

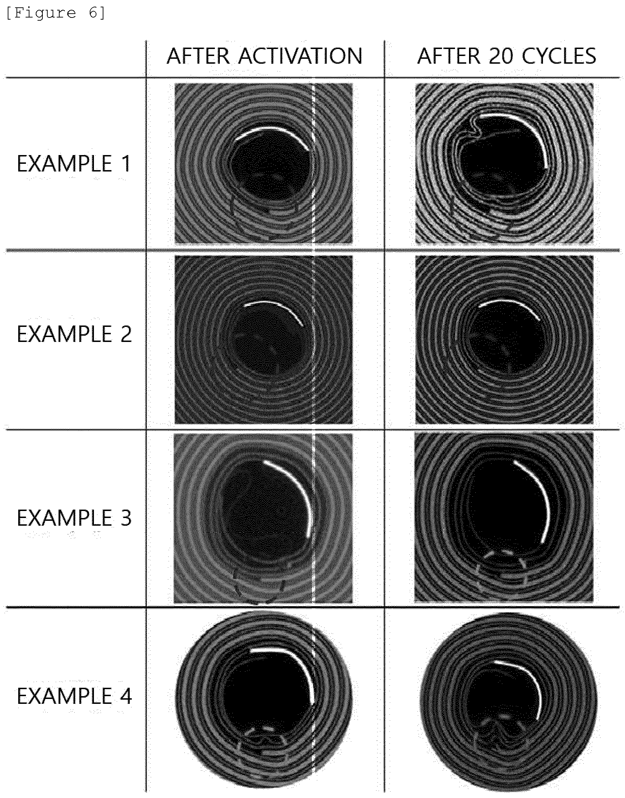

The secondary batteries prepared in Examples 1 to 4 and Comparative Example 1 were subjected to 2 cycles of 4.2 V-2.5 V, 0.2 C charging, and 0.2 C discharging, respectively, leading to preparation of activated secondary batteries. Thereafter, each of the activated secondary batteries was subjected to 20 cycles under conditions of 4.3 V-2.5 V 1 C/1 C @25°C. Then, for the short-term cycle stability evaluation, the core parts of the prepared secondary batteries were subjected to computed tomography (CT) to check the core impingement. The Images are shown in FIGS. 4 and 6, respectively.

### Long-term Cycle Stability Evaluation

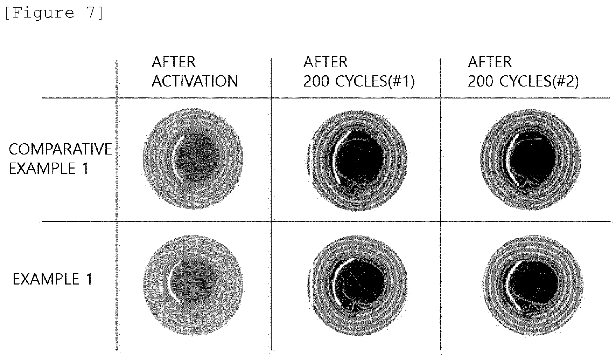

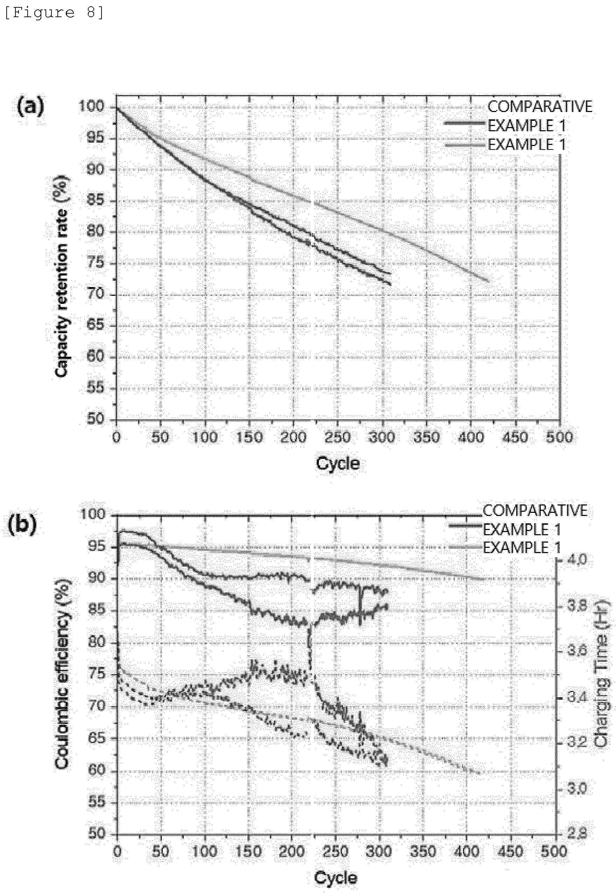

The secondary batteries prepared in Example 1 and Comparative Example 1 were subjected to 2 cycles of 4.2 V-2.5 V, 0.2 C charging, and 0.2 C discharging, respectively, leading to preparation of activated secondary batteries. Thereafter, each of the activated secondary batteries was subjected to 200 cycles under conditions of 4.25 V(0.3 C)-2.85 V(0.5 C) @55°C. Then, for the long-term cycle stability evaluation, the core parts were subjected to computed tomography (CT) to check the core impingement. The images are shown in FIG. 7, respectively. In addition, the energy density, the capacity retention rate, and the coulombic efficiency according to cycle progress were measured and shown in Table 2 below and FIG. 8.

**[Table 2]**

| | Comparative Example 1 | | Example 1 | |
|---|---|---|---|---|
| Energy Density (Wh) | 18.8 | 18.6 | 18.7 | 18.9 |
| | 18.7 | | 18.8 | |
| Capacity retention rate (%) | 71.7 (@309cyc) | 73.3 (@309cyc) | 79.8 (@309cyc) | 73.3 (@309cyc) |
| | 79.8 | | 72.5 | |
| Coulombic efficiency (%) | 88.0 | | 92.0 | |

### Core Impingement Evaluation

Whether the core impingement has occurred was evaluated for the secondary batteries of Example 1 and Comparative Example 1 by the following method.

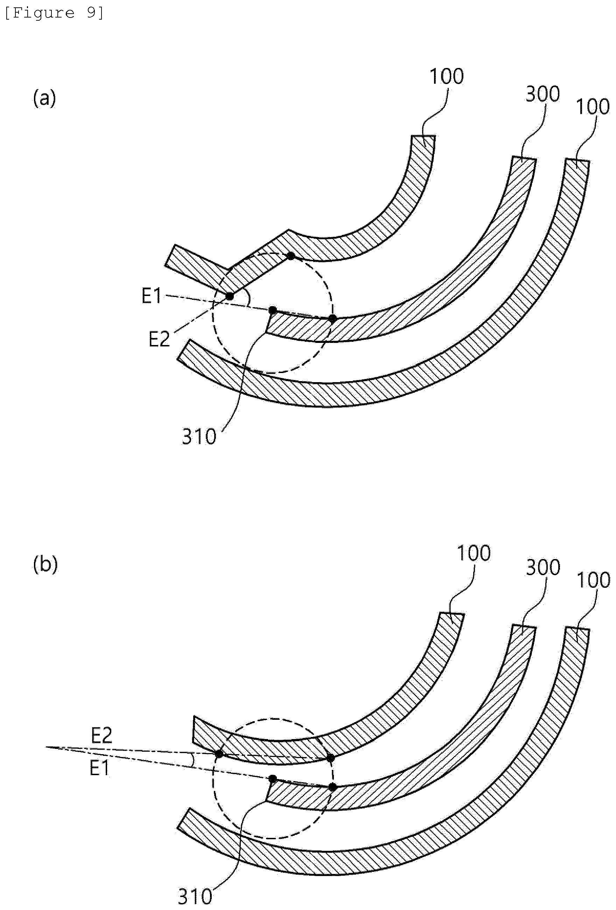

FIG. 9 schematically shows a method for evaluating whether the core impingement has occurred. Specifically, FIG. 9(a) schematically shows a method for evaluating whether the core impingement has occurred when deformation occurred in the negative electrode, and FIG. 9(b) schematically shows a method for evaluating whether the core impingement has occurred when deformation did not occur in the negative electrode.
1) On the first surface of the positive electrode 300, a first extension line E1 is drawn by extending a straight line connecting the longitudinal end portion 310 of the positive electrode and a point 5 mm spaced from the end portion.

### 2-1) When the negative electrode is deformed

At the core part of the jelly-roll type electrode assembly, on the surface of the negative electrode 100 facing the first surface of the positive electrode, a second extension line E2 is drawn by extending a straight line connecting two points where a direction of curvature changes within a spacing distance of 5 mm from the longitudinal end portion 310 of the positive electrode.

### 2-2) When there is no deformation in the negative electrode

At the core part of the jelly-roll type electrode assembly, on the surface of the negative electrode 100 facing the first surface of the positive electrode, a second extension line E2 is drawn by extending a straight line connecting two points 5 mm spaced from the longitudinal end portion 310 of the positive electrode.

3) When an angle from the first extension line E1 to the second extension line E2 in a counterclockwise direction with respect to the intersection of the first extension line E1 and the second extension line E2 exceeded 25°, it was evaluated that the core impingement occurred. On the other hand, in the case where an unknown secondary battery (unknown cell) is acquired, the above method for evaluating whether the core impingement has occurred may be applied in a manner of evaluating whether the core impingement has occurred at the time of initial acquisition, reevaluating whether the core impingement has occurred every 250 cycles, and comparing and analyzing the result with the core impingement conditions of the secondary battery of the exemplary embodiment according to the present invention.

FIG. 4 is a CT image showing the results of the short-term cycle stability evaluation of the secondary batteries according to Example 1 and Comparative Example 1, and FIG. 7 is a CT image showing the results of the long-term cycle stability evaluation of the secondary batteries according to Example 1 and Comparative Example 1.

Referring to FIGS. 4 and 7, it was confirmed that no core impingement occurred in both the short-term cycle stability evaluation and the long-term cycle stability evaluation of the secondary battery prepared in Example 1, but that the core impingement occurred in both the short-term cycle stability evaluation and the long-term cycle stability evaluation of the secondary battery prepared in Comparative Example 1. Specifically, regarding the secondary battery prepared in Comparative Example 1, it was confirmed that the core impingement did not occur in the secondary battery before activation, but that the core impingement occurred in some parts of the secondary battery after activation. Furthermore, after 20 cycles, which is a short-term cycle, and 200 cycles, which are long-term cycles, it was confirmed that the frequency and degree of damage to the negative electrode and separator by the longitudinal end portion of the positive electrode, i.e., core impingement due to contraction/expansion of the electrode assembly, considerably increased.

FIG. 6 is a CT image showing results of short-term cycle stability evaluation for secondary batteries according to Examples 1 to 4.

Referring to FIG. 6, it was confirmed that no core impingement occurred in all the secondary batteries prepared in Examples 1 to 4 after activation. However, in the case of Example 3 in which the first separator and the second separator were not provided with a coating layer, it was confirmed that after the acceleration cycle, the slight bending of the negative electrode facing the first surface of the positive electrode occurred. In the case of Example 4 in which the separator overlapping portion was less than 6 mm, it was confirmed that after activation, the slight bending of the negative electrode facing the first surface of the positive electrode occurred, and the core impingement occurred after the acceleration cycle.

Through this, it can be seen that when the coating layer provided on at least one surface of each of the first separator and the second separator is included, the greater friction coefficient can be implemented, and the damage to the negative electrode and the separator can be prevented even during contraction/expansion of the electrode by suppressing the sliding of the electrode, as compared with the case where the separator overlapping portion does not include a coating layer, i.e., the base layer and the base layer are in contact with each other at both the first interface and the second interface. Furthermore, it can be seen that when the length of the separator overlapping portion is controlled beyond a specific range, the above-described effect of preventing damage to the negative electrode and the separator is more excellent.

FIG. 8 is a graph showing results of long-term cycle stability evaluation for secondary batteries according to Example 1 and Comparative Example 1. Specifically, FIG. 8(a) is a graph showing capacity retention rates according to cycle progress of the secondary batteries according to Example 1 and Comparative Example 1, and FIG. 8(b) is a graph showing coulombic efficiency according to the cycle progress of the secondary batteries according to Example 1 and Comparative Example 1.

Referring to Table 2 and FIG. 8, it was confirmed that although the secondary battery according to Example 1 was provided with the separator overlapping portion for core impingement improvement, it exhibited the initial energy density and capacity retention rate similar to those of the comparative example in which the separator overlapping portion was not provided. On the other hand, in the case of the secondary battery according to Comparative Example 1, it was confirmed that the capacity retention rate decreased after the initial 50 cycles, i.e., when the long-term cycle progressed. Specifically, it was confirmed that, after 50 cycles, the coulombic efficiency reversed, as compared with the secondary battery according to Example 1, and that the life decreased due to an internal short resulting from a large fluctuation width.

Through this, it can be seen that, in the case of the secondary battery according to Example 1, even when the separator overlapping portion is provided, a significant decrease in the initial energy density and capacity retention rate does not occur, the battery stability and life characteristics are more excellent, as compared with the secondary battery according to Comparative Example 1 in which the separator overlapping portion is not provided.

That is, it can be seen that the jelly-roll type electrode assembly according to an exemplary embodiment of the present invention includes the separator overlapping portion having the separators that are overlapped and arranged and are in three or more folds at a specific location, thereby suppressing sliding of the electrode during charging and discharging of the battery to prevent damage to the negative electrode and the separator from deformation of the electrode assembly due to contraction/expansion of the electrode. In addition, it can be seen that even when the separator is damaged, the separator overlapping portion can prevent an internal short between the positive electrode and the negative electrode to improve the battery stability and the life characteristics. Furthermore, it can be seen that the above-mentioned effects can be further improved when the bending structure of the core part separator, the friction coefficient between the interfaces, and the length range of the separator overlapping portion are controlled.

## Claims

1. A jelly-roll type electrode assembly in which a first separator (200), a negative electrode (100), a second separator (400), and a positive electrode (300) are sequentially stacked and wound,
wherein the positive electrode (300) has a first surface in a direction of a winding axis of the jelly-roll type electrode assembly, and a second surface opposite to the first surface,
wherein a core part of the electrode assembly comprises a separator overlapping portion (S) between the positive electrode (300) and the negative electrode (100) facing the first surface of the positive electrode (300), and
wherein the separator overlapping portion (S) comprises separators that are overlapped and arranged and are in three or more folds,
wherein the separator overlapping portion (S) comprises a first interface (S1) at which the second separator (400) and the second separator (400') are in direct contact with each other, and a second interface (S2) at which the second separator (400') and the first separator (200') are in direct contact with each other, and
wherein a friction coefficient of the first interface (S1) is 0.6 or greater, and
wherein a friction coefficient of the second interface (S2) is 0.4 or greater, as measured in accordance with the ASTM D 1894 standard, and
wherein the first separator (200, 200') and the second separator (400, 400') each comprise a coating layer (202, 202', 402, 402') provided on at least one surface thereof, and
wherein the surface of each of the first separator (200, 200') and the second separator (400, 400'), on which the coating layer (202, 202', 402, 402') is provided, has a greater friction coefficient than that of a surface of each of the first separator (200, 200') and the second separator (400, 400'), on which the coating layer (202, 202', 402, 402') is not provided.

2. The jelly-roll type electrode assembly of claim 1, wherein at the core part of the electrode assembly, the first separator (200), the negative electrode (100), and the second separator (400) extend longer than a longitudinal end portion of the positive electrode (310) and are additionally wound.

3. The jelly-roll type electrode assembly of claim 1, wherein in the separator overlapping portion (S), the first separator (200') and the second separator (400') extending from a longitudinal end portion of the negative electrode (110) at the core part of the electrode assembly are overlapped and arranged.

4. The jelly-roll type electrode assembly of claim 1, wherein the first separator (200') and the second separator (400'),
extend from a longitudinal end portion of the negative electrode (110) at the core part of the electrode assembly,
are bent together in an opposite direction to a direction facing a winding axis of the negative electrode (100), and
are overlapped and arranged between the positive electrode (300) and the second separator (400) facing the first surface of the positive electrode (300).

5. The jelly-roll type electrode assembly of claim 1, wherein the first separator (200, 200') and the second separator (400, 400') each comprise a coating layer (202, 202', 402, 402') provided on at least one surface thereof, and
wherein the coating layer (202, 202', 402, 402') comprises an inorganic component, a binder component and a lithium salt.

6. The jelly-roll type electrode assembly of claim 1, wherein the first separator (200, 200') and the second separator (400, 400') each comprise a coating layer (202, 202', 402, 402') provided on one surface thereof, and
wherein the first interface (S1) is an interface at which the coating layer (402) of the second separator (400) and the coating layer (402') of the second separator (400') are in direct contact with each other.

7. The jelly-roll type electrode assembly of claim 1, wherein the first separator (200, 200') and the second separator (400, 400') each comprise a coating layer (202, 202', 402, 402') provided on one surface thereof, and
wherein the second interface (S2) is an interface at which a surface of the second separator (400, 400') on which a coating layer (402, 402') is not provided and a surface of the first separator (200, 200') on which a coating layer (202, 202') is not provided are in direct contact with each other.

8. The jelly-roll type electrode assembly of claim 1, wherein the first interface (S1) is an interface at which the second separator (400) facing the first surface of the positive electrode (300) and the second separator (400') extending from a longitudinal end portion of the negative electrode (110) at the core part of the electrode assembly are in direct contact with each other.

9. The jelly-roll type electrode assembly of claim 1, wherein the second interface (S2) is an interface at which the first separator (200') extending from a longitudinal end portion of the negative electrode (110) at the core part of the electrode assembly and the second separator (400') extending from the longitudinal end portion of the negative electrode (110) at the core part of the electrode assembly are in direct contact with each other.

10. The jelly-roll type electrode assembly of claim 1, wherein a length, in a longitudinal direction, of the separator overlapping portion (S) is 30% or more based on 100% of a circumference of the electrode assembly.

11. The jelly-roll type electrode assembly of claim 1, wherein a spacing distance (L) between a longitudinal end portion of the separator overlapping portion and a longitudinal end portion of the positive electrode is 3 mm or longer.

12. A secondary battery comprising:
the jelly-roll type electrode assembly according to any one of Claims 1 to 11; and
a battery case for accommodating the electrode assembly.

## Patentansprüche

1. Elektrodenanordnung vom Jelly-Roll-Typ, bei der ein erster Separator (200), eine negative Elektrode (100), ein zweiter Separator (400) und eine positive Elektrode (300) aufeinanderfolgend gestapelt und gewickelt sind,
wobei die positive Elektrode (300) eine erste Oberfläche in einer Richtung einer Wickelachse der Elektrodenanordnung vom Jelly-Roll-Typ und eine zweite Oberfläche gegenüber der ersten Oberfläche aufweist,
wobei ein Kernteil der Elektrodenanordnung einen Separator-Überlappungsabschnitt (S) zwischen der positiven Elektrode (300) und der negativen Elektrode (100) umfasst, der der ersten Oberfläche der positiven Elektrode (300) zugewandt ist, und
wobei der Separator-Überlappungsabschnitt (S) Separatoren umfasst, die überlappt und angeordnet sind und in drei oder mehr Falten vorliegen,
wobei der Separator-Überlappungsabschnitt (S) eine erste Grenzfläche (S1), an der der zweite Separator (400) und der zweite Separator (400') in direktem Kontakt miteinander stehen, und eine zweite Grenzfläche (S2), an der der zweite Separator (400') und der erste Separator (200') in direktem Kontakt miteinander stehen, umfasst, und
wobei ein Reibungskoeffizient der ersten Grenzfläche (S1) 0,6 oder größer ist, und
wobei ein Reibungskoeffizient der zweiten Grenzfläche (S2) 0,4 oder größer ist, wie gemäß dem Standard ASTM D 1894 gemessen, und
wobei der erste Separator (200, 200') und der zweite Separator (400, 400') jeweils eine Beschichtungsschicht (202, 202', 402, 402') umfassen, die auf mindestens einer Oberfläche davon bereitgestellt ist, und
wobei die Oberfläche von jedem des ersten Separators (200, 200') und des zweiten Separators (400, 400'), auf der die Beschichtungsschicht (202, 202', 402, 402') bereitgestellt ist, einen größeren Reibungskoeffizienten aufweist als der einer Oberfläche von jedem des ersten Separators (200, 200') und des zweiten Separators (400, 400'), auf der die Beschichtungsschicht (202, 202', 402, 402') nicht bereitgestellt ist.

2. Elektrodenanordnung vom Jelly-Roll-Typ nach Anspruch 1, bei der sich an dem Kernteil der Elektrodenanordnung der erste Separator (200), die negative Elektrode (100) und der zweite Separator (400) länger als ein Längsendabschnitt der positiven Elektrode (310) erstrecken und zusätzlich gewickelt sind.

3. Elektrodenanordnung vom Jelly-Roll-Typ nach Anspruch 1, bei der in dem Separator-Überlappungsabschnitt (S) der erste Separator (200') und der zweite Separator (400'), die sich von einem Längsendabschnitt der negativen Elektrode (110) an dem Kernteil der Elektrodenanordnung erstrecken, überlappt und angeordnet sind.

4. Elektrodenanordnung vom Jelly-Roll-Typ nach Anspruch 1, bei der der erste Separator (200') und der zweite Separator (400')
sich von einem Längsendabschnitt der negativen Elektrode (110) an dem Kernteil der Elektrodenanordnung erstrecken,
zusammen in einer entgegengesetzten Richtung zu einer Richtung gebogen sind, die einer Wickelachse der negativen Elektrode (100) zugewandt ist, und
überlappt und zwischen der positiven Elektrode (300) und dem zweiten Separator (400) angeordnet sind, der der ersten Oberfläche der positiven Elektrode (300) zugewandt ist.

5. Elektrodenanordnung vom Jelly-Roll-Typ nach Anspruch 1, bei der der erste Separator (200, 200') und der zweite Separator (400, 400') jeweils eine Beschichtungsschicht (202, 202', 402, 402') umfassen, die auf mindestens einer Oberfläche davon bereitgestellt ist, und
wobei die Beschichtungsschicht (202, 202', 402, 402') eine anorganische Komponente, eine Bindemittelkomponente und ein Lithiumsalz umfasst.

6. Elektrodenanordnung vom Jelly-Roll-Typ nach Anspruch 1, bei der der erste Separator (200, 200') und der zweite Separator (400, 400') jeweils eine Beschichtungsschicht (202, 202', 402, 402') umfassen, die auf einer Oberfläche davon bereitgestellt ist, und
wobei die erste Grenzfläche (S1) eine Grenzfläche ist, an der die Beschichtungsschicht (402) des zweiten Separators (400) und die Beschichtungsschicht (402') des zweiten Separators (400') in direktem Kontakt miteinander stehen.

7. Elektrodenanordnung vom Jelly-Roll-Typ nach Anspruch 1, bei der der erste Separator (200, 200') und der zweite Separator (400, 400') jeweils eine Beschichtungsschicht (202, 202', 402, 402') umfassen, die auf einer Oberfläche davon bereitgestellt ist, und
wobei die zweite Grenzfläche (S2) eine Grenzfläche ist, an der eine Oberfläche des zweiten Separators (400, 400'), auf der keine Beschichtungsschicht (402, 402') bereitgestellt ist, und eine Oberfläche des ersten Separators (200, 200'), auf der keine Beschichtungsschicht (202, 202') bereitgestellt ist, in direktem Kontakt miteinander stehen.

8. Elektrodenanordnung vom Jelly-Roll-Typ nach Anspruch 1, bei der die erste Grenzfläche (S1) eine Grenzfläche ist, an der
der zweite Separator (400), der der ersten Oberfläche der positiven Elektrode (300) zugewandt ist, und der zweite Separator (400'), der sich von einem Längsendabschnitt der negativen Elektrode (110) an dem Kernteil der Elektrodenanordnung erstreckt, in direktem Kontakt miteinander stehen.

9. Elektrodenanordnung vom Jelly-Roll-Typ nach Anspruch 1, bei der die zweite Grenzfläche (S2) eine Grenzfläche ist, an der
der erste Separator (200'), der sich von einem Längsendabschnitt der negativen Elektrode (110) an dem Kernteil der Elektrodenanordnung erstreckt, und der zweite Separator (400'), der sich von dem Längsendabschnitt der negativen Elektrode (110) an dem Kernteil der Elektrodenanordnung erstreckt, in direktem Kontakt miteinander stehen.

10. Elektrodenanordnung vom Jelly-Roll-Typ nach Anspruch 1, bei der eine Länge in einer Längsrichtung des Separator-Überlappungsabschnitts (S) 30% oder mehr basierend auf 100% eines Umfangs der Elektrodenanordnung beträgt.

11. Elektrodenanordnung vom Jelly-Roll-Typ nach Anspruch 1, bei der ein Zwischenraumsabstand (L) zwischen einem Längsendabschnitt des Separator-Überlappungsabschnitts und einem Längsendabschnitt der positiven Elektrode 3 mm oder länger beträgt.

12. Sekundärbatterie, umfassend:
die Elektrodenanordnung vom Jelly-Roll-Typ nach einem der Ansprüche 1 bis 11; und
ein Batteriegehäuse zum Aufnehmen der Elektrodenanordnung.

## Revendications

1. Ensemble d'électrodes du type « Jelly Roll » dans lequel un premier séparateur (200), une électrode négative (100), un deuxième séparateur (400), et une électrode positive (300) sont empilés en séquence et enroulés,
l'électrode positive (300) présentant une première surface dans une direction d'un axe d'enroulement de l'ensemble d'électrodes du type « Jelly Roll », et une deuxième surface située face à la première surface,
une partie centrale de l'ensemble d'électrodes comprenant une partie de chevauchement du séparateur (S) entre l'électrode positive (300) et l'électrode négative (100) située face à la première surface de l'électrode positive (300),
et
la partie de chevauchement du séparateur (S) comprenant des séparateurs chevauchés et agencés, et se présentant en trois plis ou davantage,
la partie de chevauchement du séparateur (S) comprenant une première interface (S1) sur laquelle le deuxième séparateur (400) et le deuxième séparateur (400') sont en contact direct entre eux, et une deuxième interface (S2) sur laquelle le deuxième séparateur (400') et le premier séparateur (200') sont en contact direct entre eux, et
un coefficient de friction de la première interface (S1) étant 0,6, ou davantage, et
un coefficient de friction de la deuxième interface (S2) étant 0,4, ou davantage, mesuré conformément à la norme ASTM D 1894, et
le premier séparateur (200, 200') et le deuxième séparateur (400, 400') comprenant chacun une couche de revêtement (202, 202', 402, 402') appliquée sur au moins une surface de ces derniers, et
la surface de chacun du premier séparateur (200, 200') et du deuxième séparateur (400, 400'), sur laquelle la couche de revêtement (202, 202', 402, 402') est appliquée, présentant un coefficient de friction supérieur à celui d'une surface de chacun du premier séparateur (200, 200') et du deuxième séparateur (400, 400'), sur laquelle la couche de revêtement (202, 202', 402, 402') n'est pas appliquée.

2. Ensemble d'électrodes du type « Jelly Roll » selon la revendication 1, dans lequel, à la partie centrale de l'ensemble d'électrodes, le premier séparateur (200), l'électrode négative (100), et le deuxième séparateur (400) s'étendent sur une longueur supérieure à une partie terminale longitudinale de l'électrode positive (310), et font l'objet d'un enroulement additionnel.

3. Ensemble d'électrodes du type « Jelly Roll » selon la revendication 1, dans lequel, à la partie de chevauchement des séparateurs (S), le premier séparateur (200') et le deuxième séparateur (400'), s'étendant depuis une partie terminale longitudinale de l'électrode négative (110) à la partie centrale de l'ensemble d'électrodes, sont chevauchés et agencés.

4. Ensemble d'électrodes du type « Jelly Roll » selon la revendication 1, le premier séparateur (200') et le deuxième séparateur (400'),
s'étendant depuis une partie terminale longitudinale de l'électrode négative (110) à la partie centrale de l'ensemble d'électrodes,
étant pliés ensemble dans une direction opposée à une direction faisant face à un axe d'enroulement de l'électrode négative (100), et
étant chevauchés et agencés entre l'électrode positive (300) et le deuxième séparateur (400) faisant face à la première surface de l'électrode positive (300).

5. Ensemble d'électrodes du type « Jelly Roll » selon la revendication 1, le premier séparateur (200, 200') et le deuxième séparateur (400, 400') comprenant chacun une couche de revêtement (202, 202', 402, 402') appliquée sur au moins une surface de ces derniers,
la couche de revêtement (202, 202', 402, 402') comprenant un composant inorganique, un composant de liant, et un sel de lithium.

6. Ensemble d'électrodes du type « Jelly Roll » selon la revendication 1, le premier séparateur (200, 200') et le deuxième séparateur (400, 400') comprenant chacun une couche de revêtement (202, 202', 402, 402') appliquée sur au moins une surface de ces derniers,
la première interface (S1) étant une interface à laquelle la couche de revêtement (402) du deuxième séparateur (400), et la couche de revêtement (402') du deuxième séparateur (400)' sont en étroit contact l'une avec l'autre.

7. Ensemble d'électrodes du type « Jelly Roll » selon la revendication 1, le premier séparateur (200, 200') et le deuxième séparateur (400, 400') comprenant chacun une couche de revêtement (202, 202', 402, 402') appliquée sur une surface de ces derniers, et
la deuxième interface (S2) étant une interface sur laquelle une surface du deuxième séparateur (400, 400'), sur laquelle une couche de revêtement (402, 402') n'est pas appliquée, et une surface du premier séparateur (200, 200'), sur laquelle une couche de revêtement (202, 202') n'est pas appliquée, sont en étroit contact l'une avec l'autre.

8. Ensemble d'électrodes du type « Jelly Roll » selon la revendication 1, la première interface (S1) étant une interface sur laquelle le deuxième séparateur (400) faisant face à la première surface de l'électrode positive (300) et le deuxième séparateur (400') s'étendant d'une partie terminale longitudinale de l'électrode négative (110) à la partie centrale de l'ensemble d'électrodes sont en étroit contact l'un avec l'autre.

9. Ensemble d'électrodes du type « Jelly Roll » selon la revendication **1,** la deuxième interface (S2) étant une interface sur laquelle le premier séparateur (200') s'étendant d'une partie terminale longitudinale de l'électrode négative (110) à la partie centrale de l'ensemble d'électrodes et le deuxième séparateur (400') s'étendant d'une partie terminale longitudinale de l'électrode négative (110) à la partie centrale de l'ensemble d'électrodes sont en étroit contact l'un avec l'autre.

10. Ensemble d'électrodes du type « Jelly Roll » selon la revendication **1,** une longueur, dans une direction longitudinale, de la partie chevauchante du séparateur (S) étant 30% ou davantage sur la base de 100% d'une circonférence de l'ensemble d'électrodes.

11. Ensemble d'électrodes du type « Jelly Roll » selon la revendication **1,** une distance d'espacement (L) entre une partie terminale longitudinale de la partie chevauchante du séparateur et une partie terminale longitudinale de l'électrode positive mesurant 3 mm ou davantage.

12. Batterie secondaire comprenant :
l'ensemble d'électrodes du type « Jelly Roll » selon une quelconque des revendications 1 à 11 ; et
un boîtier de batterie pour loger l'ensemble d'électrodes.
